Europäisches Patentamt

European Patent Office

Office européen des brevets

(11) Veröffentlichungsnummer: **0 428 120 A2**

# (12) EUROPÄISCHE PATENTANMELDUNG

(21) Anmeldenummer: 90121662.2

(22) Anmeldetag: 13.11.90

(51) Int. Cl.⁵: **F16L  27/12**

(30) Priorität: 13.11.89 IT 2209289 U

(43) Veröffentlichungstag der Anmeldung:
22.05.91 Patentblatt  91/21

(84) Benannte Vertragsstaaten:
AT BE CH DE DK ES FR GB GR IT LI LU NL SE

(71) Anmelder: FIMCIM S.r.l.
Via Turati, 29
I-20121 Milano(IT)

(72) Erfinder: Cimberio, Renzo
Via Torchio 57
I-28017 S. Maurizio d'Opaglio(IT)

(74) Vertreter: Mayer, Hans Benno, Dipl.-Ing.
de Dominicis & Mayer S.r.l. Piazzale
Marengo, 6
I-20121 Milano(IT)

(54) **Trennbares Verbindungsstück für Rohrleitungen.**

(57) Trennbares Verbindungsstueck fuer Rohrleitungen, bei dem zwei Anschlußstuecke vorgesehen sind, die nach Art einer Kolben-Zylindereinheit miteinander verbunden sind, wobei das zylinderfoermige Anschlußstueck mit einer durchgehenden Kammer versehen ist und das kolbenfoermige Anschlußstueck einen inneren Anschlagflansch bildet und dass eine Ueberwurfmutter vorgesehen ist, die auf dem zylinderfoermigen Anschlußstueck aufschraubbar ist und einen radial angeordneten Anschlag aufweist, der den maximalen Ausfahrhub des kolbenfoermigen Anschlußstueckes festlegt.

FIG. 2

## TRENNBARES VERBINDUNGSSTUECK FUER ROHRLEITUNGEN

Die vorstehende Erfindung betrifft ein trennbares Verbindungsstueck fuer Rohrleitungen.

Es sind bereits trennbare Verbindungsstuecke fuer Rohrleitungen bekanntgeworden, die aus drei Bauteilen bestehen, naemlich zwei endseitig an den Rohren anbringbare Endstuecke und eine zwischengeschaltete Befestigungsmutter zum gegenseitigen Verschrauben der endseitig angebrachten Verbindungteile. Die endseitig angebrachten Verbindungteile weisen Aussengewinde und sich gegenueberliegende Endstuecke auf, von denen das eine mit dem anderen in Verbindung steht. Dabei weist ein Endstueck einen Anschlussflansch auf, mit dem eine Spannmutter in Verbindung tritt, wobei die Mutter als haubenfoermige Ueberwurfmutter ausgebildet ist, die ueber ein Innengewinde auf das Aussengewinde des verbleibenden Anschlußstueckes aufgeschraubt ist.

Anschlußstuecke dieser Art werden ueblicherweise in Wasserleitungen, Heizungsanlagen, Sanitaeranlagen, Druckluftleitungen und aehnlichen Einrichtungen dazu verwendet, um sich gegenueberliegende Enden von Rohrleitungen zu verbinden oder ein Ende einer Rohrleitung an den Anschlussflansch eines Geraetes, z. B. eines Ventilkoerpers, eines Messgeraetes oder einer Heizungspumpe, die in die Anlage einzubauen ist, anzuschliessen. Die bekannten Anschlußstuecke werden wie folgt eingebaut: Zuerst werden die mit einem Gewinde versehenen und zu verbindenden Enden der Leitungen vorbereitet. Dabei ist ein gegenseitiger Abstand zwischen den Enden des verwendeten Anschlußstueckes einzuhalten. Im Anschluss daran wird auf einem anzuschliessenden Gewindeende ein Anschlußstueck aufgeschraubt und schliesslich werden die beiden Endstuecke in gegenseitige Wirkverbindung gebracht und unter Verwendung einer Ueberwurfmutter verspannt.

Zum Trennen dieser Verbindung ist es erforderlich, die Ueberwurfmutter zu loesen, worauf die beiden Endstuecke getrennt werden koennen. Die bekannten Anschlußstuecke dieser Art ermoeglichen eine sichere Verbindung nur bei Einhalten eines genauen, gegenseitigen Abstands zwischen den Endstuecken. Bei Massabweichungen gegenueber dem Nominalabstand zwischen den zu verbindenden Endstuecken kann die Verbindung nur ueber eine mangelhafte Verschraubung zwischen den zu verbindenden Enden der Anlage und den vorgesehenen Verbindungsteilen des trennbaren Verbindungsstueckes durchgefuehrt werden. Es kann auch erforderlich sein, wenigstens eines der zu verbindenden Teile durch ein neues Bauteil mit entsprechend abgeaenderter Laenge zu ersetzen. Dies fuehrt verstaendlicherweise zu einem zusaetzlichen Arbeitsaufwand und zur Bildung von Ausschussteilen. Bei Instandhaltungsarbeiten kann haeufig festgestellt werden, dass die neuen Austauschbauteile Laengenabweichungen gegenueber dem Originalbauteil aufweisen. In diesem Fall sind Anpassarbeiten notwendig, z. B. ist ein Verkuerzen der Rohrleitung durchzufuehren oder aber es sind Ausgleichsstutzen einzubauen. Auch in diesem Fall tritt ein vergroesserter Arbeitsaufwand und Materialverbrauch ein. Die Vorsehung von untereinander zu verbindenden Endstuecken sowie die Vorsehung von Anschlagflanschen an einem Endstueck sowie im Inneren der Ueberwurfmutter, fuehren zu einer wesentlichen Verteuerung der bekannten trennbar und dreistueckig ausgefuehrten Verbindungsstuecke.

Es ist ein teleskopartig ausgebildetes Verbindungsstueck bekanntgeworden, das aus zwei Endteilen mit ringfoermigen, kragenartig angeordneten Anschlaegen besteht, von denen einer dem anderen zugewandt ist, und eine maximale Verlaengerung des Anschlußstueckes erlaubt.

Das innere Anschlußstueck wird in das aeussere Anschlußstueck von aussen eingefuehrt und nach erfolgter Montage sind die beiden Bauteile teleskopartig gegeneinander verschiebbar. Es besteht bei dieser Ausfuehrungsform keine Moeglichkeit, die hergestellte Verbindung zu trennen. Bei dieser Bauweise, die besonders fuer den Anschluss von Heizkoerpern vorgesehen ist, muss der innere Anschluss notwendigerweise einen Aussendurchmesser aufweisen, der kleiner als der Aussendurchmesser des aeusseren Anschlussteiles ist. Aus diesem Grund sind Leistungsverluste nicht zu vermeiden. Um diesen Nachteil zu beheben, ist es notwendig, endseitig Ausgleichsmuttern vorzusehen. Dies fuehrt zu einer vergroesserten Anzahl der notwendigen Bauteile, einem groesseren Materialaufwand und hoeheren Montagekosten. Ferner nehmen die sich eventuell einstellenden Leckstellen zu. In einer abgeaenderten Ausfuehrungsform des bekannten teleskopartigen Verbindungsstueckes, das ebenfalls zum Beheben von Heizkoerperventilen eingesetzt wird, weist der innenliegende Anschluss an seinem inneren Ende eine Ringnut auf, die zur Aufnahme eines elastischen Anschlagringes dient. In diesem Fall muss das innere Anschlußstueck eine vom aeusseren Anschlußstueck abkragende Laenge aufweisen, wenn das teleskopische Anschlußstueck in Schließstellung angeordnet ist. Auch bei dieser Ausfuehrungsvariante tritt der erwaehnte Leistungsverlust auf, ferner ist ein Auseinandertreten der beiden Endanschluesse nach der Montage des Anschlussteiles nicht zu vermeiden, Tatsache, die in der Praxis aeusserst unerwuenscht ist, sei es was die Schwierigkeiten beim Vordringen bis zum Anschlagring anbetrifft, sei es was die sichere Befestigung desselben auf dem Anschlußstueck aufgrund von zwischenzeitlich eintretenden Verkrustungen anbetrifft.

Aufgabe der Erfindung ist es, ein trennbares Anschlußstueck fuer Rohrleitungen zu schaffen, das einen einfachen Aufbau und eine einfache Handhabung ermoeglicht, wobei der Trennvorgang zwischen den Bauteilen einfach durchfuehrbar ist und ferner eine einwandfreie und schnelle Verbindung mit den sich gegenueberliegenden und zu verbindenden Ende ermoeglicht, auch dann, wenn der Abstand zwischen den genannten und zu verbindenden Endstuecken Massabweichungen aufweist. Das erfindungsgemaesse trennbare Verbindungsstueck soll auch ohne Leistungsverluste einsetzbar sein. Die erfindungsgemaesse Aufgabe wird mit einem trennbaren Verbindungsstueck fuer Rohrleitungen dadurch geloest, dass zwei Anschlußstuecke vorgesehen sind, die nach Art einer Kolben-Zylindereinheit miteinander verbunden sind, wobei das zylinderfoermige Anschlußstueck mit einer durchgehenden Kammer versehen ist und das kolbenfoermige Anschlußstueck einen inneren Anschlagflansch bildet und eine Ueberwurfmutter vorgesehen ist, die auf das zylinderfoermige Anschlußstueck aufschraubbar ist und einen radial angeordneten Anschlag aufweist, der den maximalen Ausfahrhub des kolbenfoermigen Anschlußstueckes festlegt. Ein Anschlußstueck mit einfachem Aufbau, einfacher Handhabung und Montage sowie einfacher Trennung, das praktisch ohne Leistungsverluste arbeitet, wird dadurch geschaffen, dass:

a) das zylinderfoermig ausgebildete Anschlußstueck in seiner Bodenwand eine durchgehende Bohrung aufweist mit einem Durchmesser, der dem inneren Durchmesser der Rohrleitung oder dem anzuschliessenden Bauteil entspricht,

b) das kolbenfoermig ausgebildete Anschlußstueck eine innere durchgehende Bohrung aufweist, deren Durchmesser dem Innendurchmesser der zu verbindenden Rohrleitung entspricht,

c) die Verbindungs- und Befestigungsmutter als Ueberwurfmutter ausgebildet ist mit einem Innengewinde und einem Anschlag in Form eines Ringflansches.

Die erforderliche Abdichtung zwischen dem zylinderfoermig ausgebildeten Anschlußstueck und dem kolbenfoermig ausgebildeten Anschlußstueck wird durch Verwendung einfacher Dichtungsmittel, z. B. eines O-Ringes, der im kolbenfoermigen Anschlußstueck angeordnet ist, erzielt. Um mit Sicherheit eine ungenaue Lageanordnung in Axialrichtung, zwischen dem kolbenfoermig ausgebildeten Anschlußstueck in seinen Zwischenstellungen, d.h. zwischen einer Schließstellung und einer maximalen Oeffungsstellung auszuschliessen, ist erfindungsgemaess auf der Aussenseite des kolbenartig ausgebildeten Anschlußstueckes, zwischen der Ueberwurfmutter und dem zylinderfoermig ausgebildeten Anschlußstueck ein Anschlagring zur Bestimmung der Axiallage angeordnet.

Da die zylinderfoermig oder kolbenartig ausgebildeten Anschlußstuecke als sechseckiger Koerper ausgebildet sind, um Angriffsflaechen fuer einen Schluessel zu bilden, wird eine einfache Montage und ein einfaches Verschrauben zwischen den trennbaren Anschlußstuecken und den Leitungen oder anzuschliessenden Geraeten moeglich.

Da die Ueberwurfmutter ein einfaches Mittel zum Verschrauben oder Loesen der Verbindung darstellt, ist die Aussenflaeche der Ueberwurfmutter in vorteilhafter Weise als Sechskant ausgebildet oder sie weist eine garaendelte oder gekordelte Angriffsflaeche auf. Eine einfache und schnelle Montage bzw. Demontage des vorgeschlagenen Anschlußstueckes, auch bei unguenstigen Platzverhaeltnissen, kann dadurch erreicht werden, dass das aeussere Ende des kolbenartig augebildeten Anschlußstueckes bogenfoermig ausgebildet ist.

Mit dem erfindungsgemaessen Anschlußstueck werden wesentliche Vorteile erzielt.

Das vorgeschlagene Anschlußstueck weist einfachen Aufbau auf und kann auf automatisch arbeitenden Werkzeugmaschinen hergestellt werden. Der Aufbau des Anschlußstueckes erlaubt eine einfache, einwandfreie und schnelle Montage an den Enden der Rohrleitungen oder an den anzuschliessenden Zusatzgeraeten. Durch Vorsehung eines verschiebbaren Anschlußstueckes kann dieses von Fall zu Fall an den veraenderlichen Abstand zwischen den zu verbindenden Gewindestuecken anpasst werden.

Nach Montage des Anschlußstueckes kann dieses im Bedarfsfall auch in einfacher und rascher Weise demontiert werden. Die Einfachheit in der Montage und Demontage des Anschlußstueckes gemaess der vorstehenden Erfindung ist von wesentlicher Bedeutung, sowohl in neu zu erstellenden Rohranlagen (bei welchen der Installateur eine weitaus groessere Flexibilitaet in der Vorbereitung der einzelnen zu verbindenden Rohrstraenge hat) als auch im Reparaturfall oder beim Austausch von Baugruppen in bereits bestehenden Rohranlagen. In diesem letzteren Fall besteht die Moeglichkeit, Unterschiede in auftretenden Laengenabmessungen zwischen den Rohrenden und den auszutauschenden Bauteilen, z. B. Haehnen und Ventilen, sofort unter Verwendung des verschiebbaren Anschlußstueckes auszugleichen.

Es kann somit auf zusaetzliche Anpassarbeiten verzichtet werden.

Auch im Fall von Rohrleitungen, die Leckverluste oder Rohrbrueche aufweisen, ist der Austausch des entsprechenden Rohrstranges unter Beibehaltung groesserer Toleranzen moeglich. Es werden mit Sicherheit unnoetige Anpassarbeiten vermieden. Bei Verwendung des erfingungsgemaessen Anschlußstueckes an thermisch hochbelasteten Rohrstellen, z. B. in der Naehe von Umwaelzpumpen oder in der Naehe von Heizkesseln, kann das vorgeschlagene Zwischenstueck auch als Laengenausgleichsvorrichtung Verwendung finden. Die freie Beweglichkeit zwischen den Endstuecken ermoeglicht es somit, die in der Rohrleitung auftretenden Laengenaenderungen auszugleichen, wodurch das Rohrstueck von jeglicher mechanischer Belastung befreit ist. Das vorgeschlagene Verbindungsstueck mit einem Rohrkruemmer, weist den zusaetzlichen Vorteil auf, dass eine schnelle und einfache Montage auch an raeumlich unguenstiger Stelle, z. B. in der Naehe von Waenden, einfach und rasch durchfuehrbar ist. Weitere Vorteile und Merkmale des trennbaren Anschlußstueckes, entsprechend der vorgeschlagenen Erfindung, koennen der nun folgenden Beschreibung und den beigefuegten Zeichnungen entnommen werden.

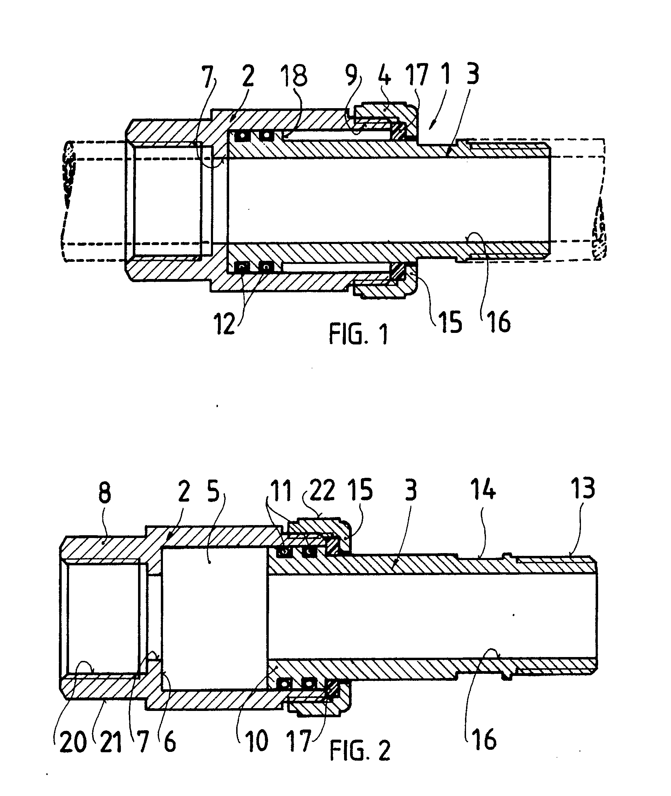

Fig. 1 zeigt einen Laengsschnitt durch ein erfindungsgemaess teilbar ausgebildetes Zwischenstueck in eingefahrener Stellung;

Fig. 2 zeigt den gleichen Laengssschnitt des Zwischenstueckes in maximal ausgefahrener Stellung;

Fig. 3 zeigt eine aehnliche Schnittdarstellung durch ein trennbares Zwischenstueck mit Rohrkruemmer.

Das Zwischenstueck ist in seiner Gesamtheit mit 1 gekennzeichnet. Es weist zwei Endanschluesse 2 und 3, sowie eine Spannmutter 4 auf. Die Anschlußteile 2 und 3 sind nach Art eines Zylinders bzw. als Kolben ausgebildet. Das Anschlusteil 2 ist als zylinderfoermiges Bauteil und das Anschlußstueck 3 als kolbenfoermiges Bauteil vorgesehen. Wie der Zeichnung zu entnehmen ist, weist das zylinderfoermig ausgebildete Anschlusteil 2 eine durchgehende, zylinderfoermige Kammer 5 auf, d. h. der Durchmesser der Kammer 5 ist gleich dem Durchmesser des kolbenfoermig ausgebildeten Anschlusteils 3. In den Boden der zylinderfoermigen Kammer 5 ist eine Durchgangsbohrung 7 eingearbeitet, deren Durchmesser dem Innendurchmesser des anzuschliessenden Rohres entspricht. Dies ist mit gestrichelten Linien dargestellt. Im gezeigten Beispiel weist das Ende 8 des Anschlußstueckes 2 ein Innengewinde 20 auf, an der Aussenseite ist dieses Bauteil als Sechskantkoerper 21 ausgefuehrt. Am anderen Ende weist das Anschlußstueck 2 ein Aussengewinde 9 auf, das zum Aufschrauben der Mutter 4 dient.

Das kolbenfoermig ausgebildete Anschlußstueck 3 weist ein Kolbenteil 10 auf, das im dargestellten Beispiel mit zwei Ringnuten 11 versehen ist, die Dichtungringe 12 aufnehmen; es wird ein kragenartiges Anschlagteil 18 gebildet. Das aeussere Ende des kolbenfoermig ausgebildeten Anschlußstueckes 3 weist ein Aussengewinde 13 auf, das zur Verbindung der Rohrleitung oder eines anzuschliessenden Bauteiles dient (mit gestrichelter Linie dargestellt). Mit 14 ist ein sechseckiges Teilstueck fuer den Angriff eines Schraubenschluessels gekennzeichnet.

Die Verbindungs- und Befestigungsmutter 4 ist in vorteilhafter Weise als Ueberwurfmutter ausgebildet, die ein Innengewinde zum Aufschrauben auf das Gewindestueck 9 des zylinderfoermig ausgebildeten Anschlußteiles 2 aufweist. Die Ueberwurfmutter bildet einen Ringflansch 15, der als Endanschlag dient. Der Flansch 15 arbeitet mit dem Anschlagkragen 18 zusammen und legt somit den maximalen Ausfahrhub des kolbenfoermig ausgebildeten Anschlussteiles 3 fest. Zum sicheren Betaetigen der Ueberwurfmutter 4 weist diese einen Sechskantkoerper oder eine Umfangsraendelung 22 auf. Das Spannen der Ueberwurfmutter muss nicht besonders fest erfolgen.

Wie der Zeichnung deutlich zu entnehmen ist, ist der Innendurchmesser der Durchgangsbohrung 16 des kolbenfoermig ausgebildeten Anschlusssteiles 3 gleich dem Durchmesser der Bohrung 7 im zylinderfoermig ausgebildeten Anschlußteil 2 und entspricht dem Innendurchmesser des Rohres oder dem Anschlussflansch des anzuschliessenden Zusatzgeraetes. Es werden somit mit Sicherheit Leistungsverluste vermieden.

Da das kolbenartig ausgebildete Anschlussteil 3 in seinen Zwischenlagen gewisse Axialverschiebungen gegenueber dem zylinderfoermigen Anschlussteil 2 durchfuehren kann, ist erfindungsgemaess auf der Aussenseite des kolbenfoermig ausgebildeten Anschlussteils 3, zwischen dem Ringflansch 15, der Ueberwurfmutter 4 und dem danebenliegenden Ende des zylinderfoermigen Anschlussteils 2, ein in Axialrichtung wirkender Lagebegrenzungsring 17 vorgesehen. Dieser Ring 17 kann aus Kunststoff oder Metall bestehen.

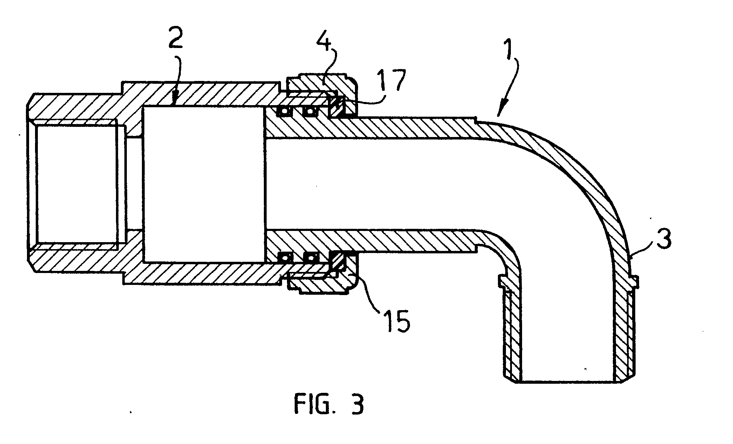

Die vorangegangenen Ausfuehrungen sind auch auf ein Verbindungsstueck mit einem Rohrkruemmer (Fig. 3) anwendbar.

Die Erfindung umfasst auch die Moeglichkeit, die Verbindungsgewinde wahlweise als Aussengewinde oder Innengewinde vorzusehen, um unterschiedlich ausgebildete Rohrenden mit dem Zwischenstueck zu verbinden. Wesentlich ist, dass zur Vermeidung von Leistungsverlusten im Zwischenstueck alle Innendurchmesser dem Durchmesser der zu verbindenden Rohre entsprechen und die Moeglichkeit einer teleskopartigen Bewegung zwischen den trennbaren Enden der Bauteile des Anschlußstueckes besteht.

## Ansprüche

1. Trennbares Zwischenstueck (1), zum Verbinden von Rohrleitungen, **dadurch gekennzeichnet,** dass zwei zusammenwirkende Anschlußstuecke (2, 3) vorgesehen sind, die nach Art einer Kolben-Zylindereinheit miteinander verbunden sind, wobei das zylinderfoermig ausgebildete Anschlußstueck (2) mit einer durchgehenden Kammer (16) versehen ist und das kolbenfoermig ausgebildete Anschlußstueck (3) einen inneren Anschlagflansch (18) bildet, dass eine Ueberwurfmutter (4) vorgesehen ist, die auf das zylinderfoermige Anschlußstueck (2) aufschraubbar ist und einen radial angeordneten Anschlagflansch (15) aufweist, der den maximalen Ausfahrhub des kolbenfoermigen Anschlußstueckes (3) festlegt.

2. Anschlußstueck nach Patentanspruch 1, **dadurch gekennzeichnet,** dass

a) das zylinderfoermig ausgebildete Anschlußstueck (2) in seiner Bodenwand eine Durchgangsbohrung (7) aufweist mit einem Durchmesser, der dem Innendurchmesser der zu verbindenden Rohrleitung entspricht,

b) das kolbenfoermig ausgebildete Anschlußstueck (3) eine innere durchgehende Bohrung (16) aufweist, deren Durchmesser dem Innendurchmesser der zu verbindenden Rohrleitung entspricht und

c) die Verbindungs- und Befestigungsmutter (15) als Ueberwurfmutter (4) ausgebildet ist, mit einem Innengewinde und einem Anschlag in Form eines Ringflansches (15).

3. Zwischenstueck, nach Patentanspruch 1 und 2, **dadurch gekennzeichnet,** dass auf der Aussenseite des kolbenfoermig ausgebildeten Anschlußstueckes (3), zwischen der Verbindungsmutter (4) und dem Anschlag (15) ein Ring (17) zur Begrenzung des axialen Hubes des kolbenfoermigen Anschlußstueckes (3) angeordnet ist.

4. Zwischenstueck, nach Anspruch 1 bis 3, **dadurch gekennzeichnet,** dass das zylinderfoermig ausgebildete Anschlußstueck (2) und das kolbenfoermig ausgebildeten Anschlußstueck (3) Sechskantform (22) aufweisen.

5. Zwischenstueck, nach Patentanspruch 1 bis 4, **dadurch gekennzeichnet,** dass die Verbindungs- und Festspannmutter (4) an ihrem Aussenumfang eine ringartige Kordelung (22) oder Raendelung aufweist.

6. Zwischenstueck nach Anspruch 1 bis 5, **dadurch gekennzeichnet,** dass eines der Anschlußstuecke als Rohrkruemmer (Fig. 3) ausgebildet ist.

EP 0 428 120 A2

FIG. 1

FIG. 2

6

FIG. 3

EP 0 428 120 A2